# EUROPÄISCHE PATENTANMELDUNG

(11) **EP 4 794 165 A1**
(43) Veröffentlichungstag der Anmeldung: **19.08.2026**
(21) Anmeldenummer: 25158524.6
(22) Anmeldetag: 18.02.2025
(51) Int. Cl.: H02J 7/00, B60L 53/80

(54) **LADEVORRICHTUNG MIT FAHRWERKSEINRICHTUNG**

(71) Anmelder: Hilti Aktiengesellschaft, 9494 Schaan (LI)
(72) Erfinder: Finckh, Julius, 76133 Karlsruhe (DE); Gronenberg, Hanna, 70188 Stuttgart (DE); Händle, Florian, 76131 Karlsruhe (DE); Hofmann, Kai, 69151 Neckargemünd (DE); Lickefett, Minh Son Michael, 76131 Karlsruhe (DE); Niegsch, Nicolas, 76137 Karlsruhe (DE)
(74) Vertreter: Hilti Aktiengesellschaft Corporate Intellectual Property

(57) **Zusammenfassung**

Vorrichtung zum Versorgen von Akkumulatoren, insbesondere als Energiespeicher einer Werkzeugmaschine, mit elektrischer Energie, enthaltend eine Steuerungseinrichtung, wenigstens einen Gleichrichter, wenigstens einen Gleichspannungswandler, wenigstens eine ersten und zweite Akku-Ladeeinheit zum jeweiligen Laden eines Akkumulators sowie wenigstens eine Eingangsschnittstelle zur Aufnahme elektrischer Energie.

Die Vorrichtung enthält eine Fahrwerkseinrichtung zum Bewegen der Vorrichtung.

## Beschreibung

Die vorliegende Erfindung betrifft eine Vorrichtung zum Versorgen von Akkumulatoren, insbesondere als Energiespeicher einer Werkzeugmaschine, mit elektrischer Energie, enthaltend eine Steuerungseinrichtung, wenigstens einen Gleichrichter, wenigstens einen Gleichspannungswandler, wenigstens eine ersten und zweite Akku-Ladeeinheit zum jeweiligen Laden eines Akkumulators sowie wenigstens eine Eingangsschnittstelle zur Aufnahme elektrischer Energie.

Auf dem Markt erhältliche Vorrichtungen zum Versorgen von Akkumulatoren mit elektrischer Energie bzw. Akku-Ladeeinrichtungen, insbesondere Ladevorrichtungen zum Versorgen von Werkzeugmaschinen-Akkumulatoren mit elektrischer Energie, sind für gewöhnlich an eine feste Netzstromquelle (d.h. Steckdose) gebunden. Die Ladeeinrichtungen sind damit lediglich an einem bestimmten Ort (stationär) verfügbar, sodass die Anwender oftmals längere Wegstrecken zurücklegen müssen, um die Ladeeinrichtungen zu nutzen. Die Nutzung dieser Ladeeinrichtungen kann dadurch zeitraubend sein und zu ungewollten Arbeitsunterbrechungen führen.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Vorrichtung zum Versorgen von Akkumulatoren, insbesondere als Energiespeicher einer Werkzeugmaschine, mit elektrischer Energie, enthaltend eine Steuerungseinrichtung, wenigstens einen Gleichrichter, wenigstens einen Gleichspannungswandler, wenigstens eine ersten und zweite Akku-Ladeeinheit zum jeweiligen Laden eines Akkumulators sowie wenigstens eine Eingangsschnittstelle zur Aufnahme elektrischer Energie.

Erfindungsgemäß enthält die Vorrichtung eine Fahrwerkseinrichtung zum Bewegen der Vorrichtung.

Jede Akku-Ladeeinheit kann ausgestaltet sein, dass eine Ausgangsspannung mit einem Wert von 12 bis 30 Volt, und insbesondere 22 Volt, oder Ausgabeleistung mit einem Wert von 100 bis 200 Watt, und insbesondere 150 Watt, zum Laden wenigstens eines Akkumulators verfügbar ist.

Die Eingangsschnittstelle zur Aufnahme elektrischer Energie kann zur Aufnahme einer AC-Eingangsspannungswert von beispielsweise 120, 220 oder 400 Volt ausgestaltet sein.

Gemäß einer vorteilhaften Ausführungsform kann es möglich sein, dass eine Energiespeichereinrichtung, welche wenigstens zur Versorgung einer Akku-Ladeeinheit mit elektrischer Energie ausgestaltet ist, enthalten ist.

Entsprechend einer weiteren vorteilhaften Ausführungsform kann es möglich sein, dass eine Energieerzeugungseinrichtung, welche wenigstens zur Versorgung einer Akku-Ladeeinheit mit elektrischer Energie ausgestaltet ist, enthalten ist.

Die Energieerzeugungseinrichtung kann beispielsweise als Dieselgenerator, Photovoltaik, Windrad oder Brennstoffzelle ausgestaltet sein.

Gemäß einer weiteren vorteilhaften Ausführungsform kann es möglich sein, dass wenigstens eine Ausgabeschnittstelle zur Abgabe elektrischer Energie enthalten ist.

Die Ausgabeschnittstelle kann derartig gestaltet sein, dass entweder eine Gleichspannung oder Wechselspannung bereitgestellt wird.

Entsprechend einer weiteren vorteilhaften Ausführungsform kann es möglich sein, dass wenigstens ein erstes abschließbares Fach zum Aufnehmen und Halten wenigstens eines Aufbewahrungsbehälters mit einem ersten Volumen sowie wenigstens ein zweites abschließbares Fach zum Aufnehmen und Halten wenigstens eines Aufbewahrungsbehälters mit einem zweiten Volumen enthalten ist.

Der Aufbewahrungsbehälter kann dabei als Koffer, insbesondere als Werkzeugkoffer, oder als Schublade ausgestaltet sein. Des Weiteren kann die Vorrichtung einen Rollladen oder eine Tür enthalten, um die Fächer zu schließen bzw. abzuschließen.

Gemäß einer weiteren vorteilhaften Ausführungsform kann es möglich sein, dass wenigstens eine Treppensteigeinrichtung enthalten ist.

Die Treppensteigeinrichtung kann als Sternräder mit beispielsweise sechs oder zehn Räder ausgestaltet sein. Je nach Ausführungsform sind dabei jeweils drei oder fünf Räder gegenüber angeordnet.

Entsprechend einer weiteren vorteilhaften Ausführungsform kann es möglich sein, dass wenigstens ein Antrieb zum Antreiben der Vorrichtung enthalten ist.

Der Antrieb für die Vorrichtung kann als Elektromotor mit einem Getriebe ausgestaltet sein.

Gemäß einer weiteren vorteilhaften Ausführungsform kann es möglich sein, dass wenigstens ein Antrieb zum Antreiben der Treppensteigeinrichtung enthalten ist.

Der Antrieb für die Treppensteigeinrichtung kann als Elektromotor mit einem Getriebe ausgestaltet sein.

Entsprechend einer weiteren vorteilhaften Ausführungsform kann es möglich sein, dass wenigstens eine Lenkeinrichtung zum Lenken der Vorrichtung in wenigstens eine erste oder zweite Richtung ausgestaltet ist.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Vorderansicht auf eine erfindungsgemäße Vorrichtung gemäß einer beispielhaften Ausführungsform;
- Figur 2: eine perspektivische Rückansicht auf die erfindungsgemäße Vorrichtung gemäß der beispielhaften Ausführungsform;
- Figur 3: eine Vorderansicht auf die Vorrichtung mit einer Anzahl an Akkumulatoren, einen als Koffer ausgestalteten Aufbewahrungsbehälter;
- Figur 4: eine Seitenansicht auf die Vorrichtung mit einer Fahrwerkseinrichtung und Treppensteigeinrichtung; und

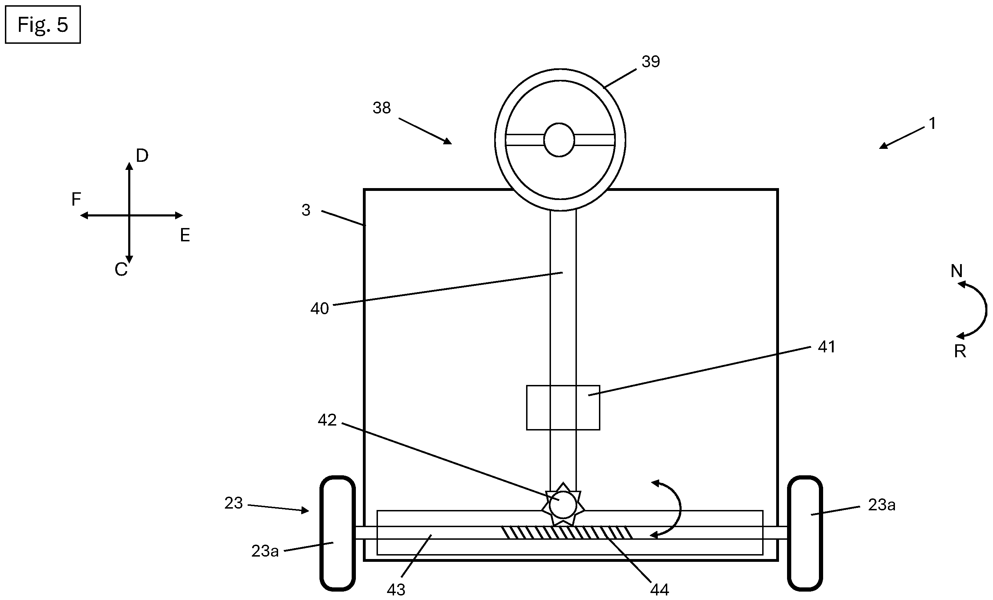

- Figur 5: eine Vorderansicht auf die Vorrichtung mit einer Lenkeinrichtung.

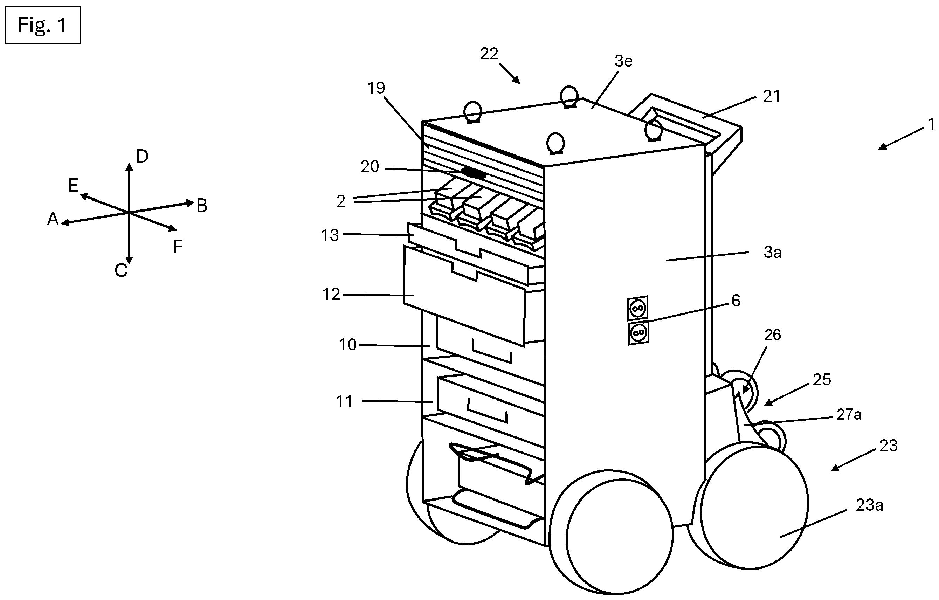

In Figur 1 bis 4 ist eine Vorrichtung 1 zum Versorgen von Akkumulatoren 2 mit elektrischer Energie gemäß einer beispielhaften Ausführungsform gezeigt.

Die Vorrichtung 1 enthält im Wesentlichen ein Gehäuse 3, Steuerungseinrichtung 4, einen Gleichrichter 5a, einen Gleichspannungswandler 5b, eine Eingangsschnittstelle 6 zur Aufnahme elektrischer Energie, eine Ausgabeschnittstelle 7 zur Abgabe elektrischer Energie, eine Anzahl an Akku-Ladeeinheiten 8 zum jeweiligen Laden eines Akkumulators 2 und eine Fahrwerkseinrichtung 23.

Die Akkumulatoren 2 können als Energieversorgung einer Werkzeugmaschine oder dergleichen verwendet werden. In den Figuren ist keine Werkzeugmaschine oder dergleichen gezeigt.

Das Gehäuse 3 der Vorrichtung 1 enthält eine erstes Fach 10, ein zweites Fach 11, eine erste Schublade 12 und eine zweite Schublade 13. Das erste Fach 10 weist dabei ein größeres Volumen als das zweite Fach 11 auf.

Des Weiteren weist die erste Schublade 12 ein größeres Volumen als die zweite Schublade 13 auf.

Es ist dabei auch möglich, dass mehr oder weniger als zwei Fächer oder zwei Schubladen in dem Gehäuse 3 vorhanden sind.

Darüber hinaus können die Fächer und Schubladen auch nahezu identische Volumen aufweisen.

Ferner ist es auch möglich, dass ausschließlich nur Fächer oder nur Schubladen in der Vorrichtung enthalten sind.

Die Fächer und Schubladen dienen im Wesentlichen dazu Aufbewahrungsbehälter 14 aufzunehmen und zu halten.

Gemäß dem vorliegenden Ausführungsbeispiel sind die Aufbewahrungsbehälter 14 als Koffer zur Aufbewahrung einer Werkzeugmaschine samt entsprechendem Zubehör ausgestaltet.

Die Schubladen können in Richtung A aus dem Gehäuse gezogen werden. Die Fächer sind fest mit dem Gehäuse 3 der Vorrichtung 1 verbunden.

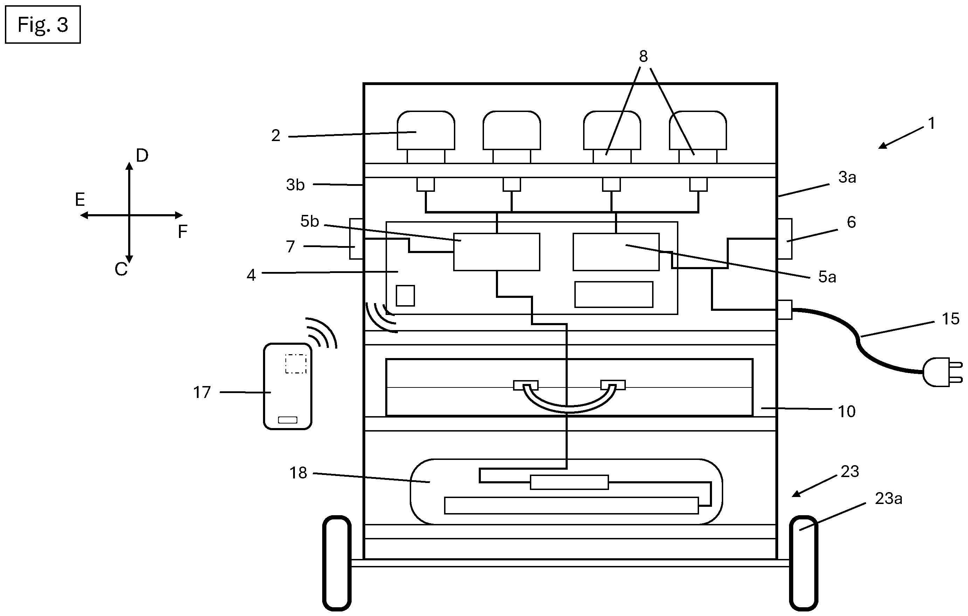

Wie in Figur 3 angedeutet, enthält die Steuerungseinrichtung 4 den Gleichrichter 5a und Gleichspannungswandler 5b.

An einer ersten Außenwandseite 3a des Gehäuses 3 der Vorrichtung 1 ist die Eingangsschnittstelle 6 zur Aufnahme elektrischer Energie positioniert, vgl. Figur 3. Die Eingangsschnittstelle 6 ist mit der Steuerungseinrichtung 4 verbunden und zur Aufnahme einer Wechselspannung (AC) ausgestaltet.

An einer zweiten Außenwandseite 3b des Gehäuses 3 der Vorrichtung 1 ist die Ausgabeschnittstelle zur Abgabe elektrischer Energie positioniert, vgl. Figur 3. Die Ausgabeschnittstelle 7 ist ebenfalls mit der Steuerungseinrichtung 4 verbunden und ist zur Ausgabe einer Wechselspannung (Alternating current (AC)) ausgestaltet.

Alternativ kann die Ausgabeschnittstelle 7 zur Ausgabe einer Gleichspannung (Direct Current (DC) ausgestaltet sein.

Darüber hinaus weist die Vorrichtung 1 an der ersten Außenwandseite 3a eine Energieversorgung 15 in Form eines Stromkabels auf, sodass die Vorrichtung 1 mit einer Netzstromquelle (d.h. Steckdose) zur Aufnahme von elektrischer Energie (d.h. in Form einer Wechselspannung (AC)) verbunden werden kann.

Die Netzstromquelle ist in den Figuren nicht gezeigt.

Die Steuerungseinrichtung 4, der Gleichrichter 5a, der Gleichspannungswandler 5b, die Fächer 10, 11, die Schubladen 12, 13 und die Akku-Ladeeinheiten 8 sind im Inneren des Gehäuses 3 der Vorrichtung 1 positioniert.

Die Steuerungseinheit 4 dient zum Steuern und Regeln der unterschiedlichen Funktionen der gesamten Vorrichtung 1 oder einzelner Bauteile oder Komponenten der Vorrichtung 1. Zu den Funktionen gehört unter anderem die Auswahl und das Festlegung einer Ladeleistung und/oder Ladungsspannung für eine einzelnen Akku-Ladeeinheiten 8 sowie der Ausgabeschnittstelle 7. Wie nachstehend noch weiter beschrieben, ist an dem Gehäuse 3 der Vorrichtung 1 eine Eingabe- und Ausgabeeinrichtung 16 vorgesehen. Durch die Eingabe- und Ausgabeeinrichtung 16 können verschiedene Kommandos (bzw. Befehle) zum Steuern einiger Funktionen der Vorrichtung 1 eingegeben werden.

Des Weiteren können Daten und Informationen bezüglich des Status der gesamten Vorrichtung 1 oder des Status einiger Komponenten der Vorrichtung 1 ausgegeben werden.

Wie in Figur 3 angedeutet, enthält die Steuerungseinheit 4 eine Funkschnittstelle, welche in dem vorliegenden Ausführungsbeispiel als Bluetooth-Modul ausgestaltet ist. Die Funkschnittstelle dient zum drahtlosen Senden und Empfangen von Daten und Informationen von und zu einem extrnen Gerät 17. Wie in Figur 3 gezeigt ist das externe Gerät 17 beispielsweise als Smartphone ausgestaltet.

Alternativ kann die Funkschnittstelle auch als eigenständiges GSM/LTE/(2/2.5/3G/4G/5G (LTE)-Modul ausgestaltete sein.

Die Akku-Ladeeinheiten 8 sind gemäß dem beispielhaften Ausführungsbeispiel auch auf einer Schublade angeordnet, sodass die Akku-Ladeeinheiten 8 ebenfalls in Pfeilrichtung A eine Wegstrecke aus dem Gehäuse 2 der Vorrichtung 1 gezogen werden können. In dem vorliegenden Ausführungsbeispiel sind acht Akku-Ladeeinheiten 8 enthalten. Die acht Ladeeinheiten 8 sind in jeweils zwei Reihen angeordnet. In Figur 1 sind lediglich vier Akku-Ladeneinheiten 8 bzw. eine erste Reihe an Akku-Ladeeinheiten 8 gezeigt.

Alternativ können auch mehr oder weniger als acht Akku-Ladeeinheiten 8 in unterschiedlichen Anordnungen vorgesehen sein.

Des Weiteren sind in dem vorliegenden Ausführungsbeispiel die acht Akku-Ladeeinheiten 8 identisch ausgestaltet. Es ist jedoch auch möglich, dass die Akku-Ladeeinheiten 8 unterschiedlich zueinander ausgestaltet sind. Jede Ladeeinheit 8 kann dabei eine unterschiedliche Ladeleistung zum Versorgen von Akkumulatoren 2 mit elektrischer Energie bereitstellen.

Wie in Figur 3 angedeutet, sind die Akku-Ladeeinheiten 8 mit der Steuerungseinrichtung 4, dem Gleichrichter 5a und dem Gleichspannungswandler 5b verbunden. Die Vorrichtung 1 ist ausgestaltet, um eine Wechselspannung von 220 Volt ausgestaltet. Gemäß dem vorliegenden Ausführungsbeispiel wird an jeder Akku-Ladeeinheit 8 eine Ladespannung von 22 Volt bzw. eine Ladeleistung von 150 Watt bereitgestellt.

Wie in Figur 1 und 3 angedeutet, ist eine Energiespeichereinrichtung 18 in dem untersten Fach der Vorrichtung 1 wiederlösbar positioniert. Gemäß dem vorliegenden Ausführungsbeispiel enthält die Energiespeichereinrichtung 18 bis zu 2 kWh. Die Energiespeichereinrichtung 18 dient im Wesentlichen zum autarken Versorgen der Akku-Ladeeinheiten 8 mit elektrischer Energie. Die Energiespeichereinrichtung 18 ist hierzu über die Steuerungseinrichtung 4 und dem Gleichspannungswandler 6 mit den jeweiligen Akku-Ladeeinheiten 8 verbunden.

Des Weiteren ist die Energiespeichereinrichtung 18 mit der Ausgabeschnittstelle 7 verbunden.

Das Gehäuse 3 der Vorrichtung 1 weist eine offene Vorderseite 3c auf, durch welche der Innenraum des Gehäuses 3 sowie die Fächer 10, 11 und Schubladen 12, 13 zugänglich ist. Wie in Figur 1 gezeigt, enthält das Gehäuses 3 der Vorrichtung 1 einen Rollladen 19 zum Verschließen der Vorderseite 3c des Gehäuses 3. Der Rollladen 19 weist ein Schloss 20 auf, um das Gehäuse 3 unzugänglich zu machen.

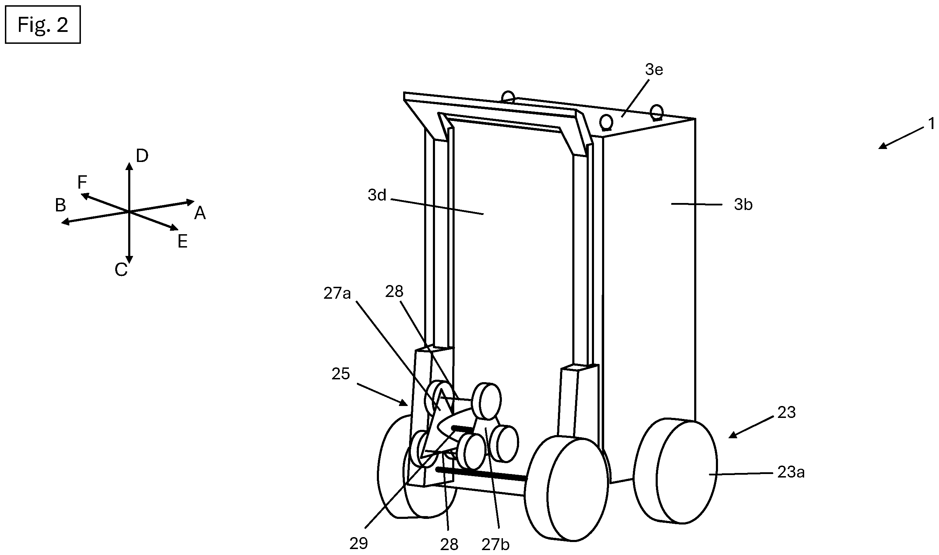

Ein Handgriff 21 ist an einer Rückseite 3d des Gehäuses 3 zum Schieben der Vorrichtung 1 vorgesehen, vgl. Figur 1 und 2.

Des Weiteren ist an einer Oberseite 3e des Gehäuses 3 der Vorrichtung 1 eine Anbindungseinrichtung 22 positioniert. Gemäß dem vorliegenden Ausführungsbeispiel ist die Anbindungseinrichtung 22 in Form von vier Ösen ausgestaltet, vgl. Figur 1 und 2. Mit Hilfe der als Ösen ausgestaltete Anbindungseinrichtung 22 kann die Vorrichtung 1 durch einen Kran oder dergleichen angehoben werden.

Der Kran oder dergleichen ist in den Figuren nicht gezeigt. Es können auch mehr oder weniger als vier Ösen vorhanden sein.

An einer Unterseite 3f des Gehäuses 3 der Vorrichtung 1 ist die Fahrwerkseinrichtung 23 enthalten. Wie in den Figuren gezeigt, weist die Fahrwerkseinrichtung 23 vier gleich große Räder 23a auf. Alternativ können auch mehr oder weniger als vier Räder 23a vorgesehen sein. Gemäß einer alternativen Ausführungsform kann die Fahrwerkseinrichtung 23 als Kettenantrieb ausgestaltet sein.

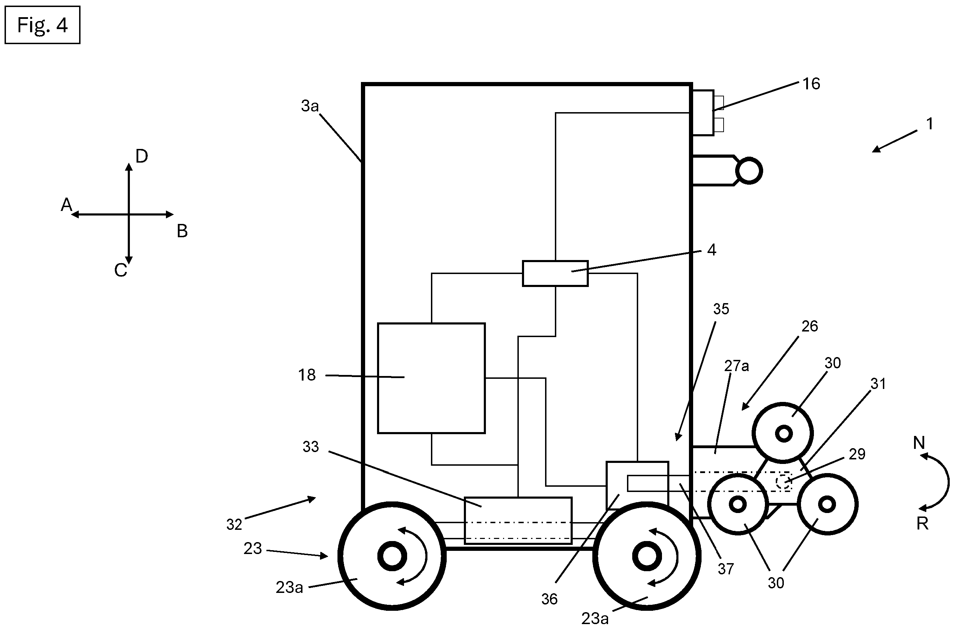

Wie in Figur 1 und 4 gezeigt, weist die Vorrichtung 1 an einer Rückseite 3g des Gehäuses 3 eine Treppensteigeinrichtung 25 auf. Die Treppensteigeinrichtung 25 dient zum sicheren Transportieren der Vorrichtung 1 entlang Stufen einer Treppe. In den Figuren ist keine Treppe gezeigt.

Entsprechend der vorliegenden Ausführungsform ist die Treppensteigeinrichtung 25 als Sternräder ausgestaltet und enthält im Wesentlichen eine Wandanbindung 26, eine erste und zweite Halteeinrichtung 27a, 27b mit jeweils drei Achsen 28, eine Zentralachse 29 sowie sechs identische Räder 30. Durch die Wandanbindung 26 ist die Treppensteigeinrichtung 25 mit der Rückseite 3g des Gehäuses 3 der Vorrichtung 1 verbunden. An dem freien Ende der Wandanbindung 26 ist die Zentralachse 29 positioniert. An den jeweiligen Ende der Zentralachse 29 ist jeweils eine Halteeinrichtung 31 drehbar in Drehrichtung N oder R um die Zentralachse 29 angeordnet. Die Halteeinrichtung 31 ist als dreieckige Platte ausgestaltet. An den jeweiligen Ecke der als Platte ausgestaltete Halteeinrichtung 31 ist jeweils eine Achse 28 mit jeweils zwei Rädern 30 drehbar gelagert. Jedes Rad 30 kann auch in Drehrichtung N oder R gedreht werden.

Gemäß einem alternativen Ausführungsbeispiel enthält die Vorrichtung 1 einen Antrieb 32 zum Antreiben der Fahrwerkseinrichtung 23 der Vorrichtung 1, vgl. Figur 4. Der Antrieb 32 weist dabei einen Elektromotor 33 und ein Getriebe 34 auf zum Antreiben der Räder 23a der Fahrwerkseinrichtung 23. Der Antrieb 32 ist so mit der Steuerungseinrichtung 4 verbunden, dass eine Verbindung zu der Eingabe- und Ausgabeeinrichtung 16 besteht. Durch die Eingabe- und Ausgabeeinrichtung 16 kann ein Verwender der Vorrichtung 1 den Antrieb 32 und damit eine Geschwindigkeit für die Vorrichtung 1 steuern. In den Figuren ist kein Anwender gezeigt.

Wie ebenfalls in Figur 4 gezeigt, ist der Antrieb 32 der Fahrwerkseinrichtung 23 mit einer separaten Energieversorgung 34 verbunden. Alternativ kann der Antrieb 32 der Fahrwerkseinrichtung 23 durch die Akkumulatoren 2 in den Akku-Ladeeinheiten 8 und/oder durch die Energiespeichereinrichtung 18 mit elektrischer Energie versorgt werden.

Entsprechend einem weiteren alternativen Ausführungsbeispiel enthält die Vorrichtung 1 einen Antrieb 35 zum Antreiben der Treppensteigeinrichtung 25.

Der Antrieb 35 für die Treppensteigeinrichtung 25 weist dabei einen Elektromotor 36 und ein Getriebe 37 auf zum Antreiben der Zentralachse 29. Der Antrieb 35 ist so mit der Steuerungseinrichtung 4 verbunden, dass eine Verbindung zu der Eingabe- und Ausgabeeinrichtung 16 besteht. Durch die Eingabe- und Ausgabeeinrichtung 16 kann ein Verwender der Vorrichtung 1 den Antrieb 35 und damit eine Geschwindigkeit für die Treppensteigeinrichtung 25 steuern. Wie ebenfalls in Figur 4 gezeigt, ist der Antrieb 35 der Treppensteigeinrichtung 25 mit der separaten Energieversorgung 36 oder einer weiteren Energieversorgung für den Antrieb 35 der Treppensteigeinrichtung 25 verbunden.

Die weitere Energieversorgung für den Antrieb 35 der Treppensteigeinrichtung 25 ist in den Figuren nicht gezeigt.

Alternativ kann der Antrieb 35 der Treppensteigeinrichtung 25 durch die Akkumulatoren 2 in den Akku-Ladeeinheiten 8 und/oder durch die Energiespeichereinrichtung 18 mit elektrischer Energie versorgt werden.

Gemäß einer weitere alternativen Ausführungsform weist die Vorrichtung 1 eine Lenkeinrichtung 38 zum Lenken der Vorrichtung 1 auf. Die Lenkeinrichtung 38 enthält dabei im Wesentlichen einen Lenker 39, ein Lenkstange 40 mit einer Halterung 41, ein Lenkritzel 42 an einem Ende der Lenkstange 40 und einen Querlenker 43 mit einer Zahnstange 44. Eine Drehbewegung des Lenkers 39 in Drehrichtung N oder R wird auf die Lenkstange 40 übertragen. Die Lenkstange 40 überträgt die Drehbewegung wiederum auf das Lenkritzel 42. Das Lenkritzel 42 und die Zahnstange 44 des Querlenkers 43 sind so zueinander angeordnet, dass die Drehbewegung des Lenkritzels 42 in eine Linearbewegung in Richtung E oder F des Querlenkers 43 übertragen wird. Die Räder 23a der Fahrwerkseinrichtung 23 sind drehbar gelagert. Die Linearbewegung des Querlenkers 43 in Richtung E oder F wird so auf die Räder 23a übertragen, dass die Räder 23a in eine Richtung E oder F gerichtet werden.

Gemäß einer weitere alternativen Ausführungsform der Vorrichtung 1 ist eine (nicht in den Figuren gezeigte) Energieerzeugungseinrichtung zur Versorgung der Akku-Ladeeinheit 8 mit elektrischer Energie vorgesehen. Die Energieerzeugungseinrichtung kann beispielsweise als Dieselgenerator oder Brennstoffzelle ausgestaltet sein.

### Bezugszeichen

- 1: Vorrichtung
- 2: Akkumulator
- 3: Gehäuse der Vorrichtung
- 3a: erste Außenwandseite des Gehäuses
- 3b: zweite Außenwandseite des Gehäuses
- 3c: Vorderseite des Gehäuses
- 3d: Rückseite des Gehäuses
- 3e: Oberseite des Gehäuses
- 3f: Unterseite des Gehäuses
- 3g: Rückseite des Gehäuses
- 4: Steuerungseinrichtung
- 5a: Gleichrichter
- 5b: Gleichspannungswandler
- 6: Eingangsschnittstelle
- 7: Ausgabeschnittstelle
- 8: Akku-Ladeeinheiten
- 10: erstes Fach
- 11: zweites Fach
- 12: erste Schublade
- 13: zweite Schublade
- 14: Aufbewahrungsbehälter
- 15: Energieversorgung
- 16: Eingabe- und Ausgabeeinrichtung
- 17: externes Gerät
- 18: Energiespeichereinrichtung
- 19: Rollladen
- 20: Schloss
- 21: Handgriff
- 22: Anbindungseinrichtung
- 23: Fahrwerkseinrichtung
- 23a: Rad der Fahrwerkseinrichtung
- 25: Treppensteigeinrichtung
- 26: Wandanbindung
- 27a: erste Halteeinrichtung
- 27b: zweite Halteeinrichtung
- 28: Achse
- 29: Zentralachse
- 30: Rad der Treppensteigeinrichtung
- 31: Halteeinrichtung
- 32: Antrieb der Fahrwerkseinrichtung
- 33: Elektromotor der Fahrwerkseinrichtung
- 34: Getriebe der Fahrwerkseinrichtung
- 35: Antrieb der Treppensteigeinrichtung
- 36: Elektromotor der Treppensteigeinrichtung
- 37: Getriebe der Treppensteigeinrichtung
- 38: Lenkeinrichtung
- 39: Lenker
- 40: Lenkstange
- 41: Halterung
- 42: Lenkritzel
- 43: Querlenker
- 44: Zahnstange

## Patentansprüche

1. Vorrichtung (1) zum Versorgen von Akkumulatoren (2), insbesondere als Energiespeicher einer Werkzeugmaschine, mit elektrischer Energie, enthaltend
- eine Steuerungseinrichtung (4),
- wenigstens einen Gleichrichter (5a),
- wenigstens einen Gleichspannungswandler (5b),
- wenigstens eine ersten und zweite Akku-Ladeeinheit (8) zum jeweiligen Laden eines Akkumulators (2), sowie
- wenigstens eine Eingangsschnittstelle (6) zur Aufnahme elektrischer Energie,
**gekennzeichnet durch** eine Fahrwerkseinrichtung (9) zum Bewegen der Vorrichtung (1).

2. Vorrichtung (1) nach Anspruch 1,
**gekennzeichnet durch** eine Energiespeichereinrichtung (18), welche wenigstens zur Versorgung einer Akku-Ladeeinheit (8) mit elektrischer Energie ausgestaltet ist.

3. Vorrichtung (1) nach Anspruch 1 oder 2,
**gekennzeichnet durch** eine Energieerzeugungseinrichtung, welche wenigstens zur Versorgung einer Akku-Ladeeinheit (8) mit elektrischer Energie ausgestaltet ist.

4. Vorrichtung (1) nach wenigstens einem der vorstehenden Ansprüche,
**gekennzeichnet durch** wenigstens eine Ausgabeschnittstelle (7) zur Abgabe elektrischer Energie.

5. Vorrichtung (1) nach wenigstens einem der vorstehenden Ansprüche,
**gekennzeichnet durch** wenigstens ein erstes abschließbares Fach (10, 11) zum Aufnehmen und Halten wenigstens eines Aufbewahrungsbehälters (14) mit einem ersten Volumen sowie wenigstens ein zweites abschließbares Fach (10, 11) zum Aufnehmen und Halten wenigstens eines Aufbewahrungsbehälters (14) mit einem zweiten Volumen.

6. Vorrichtung (1) nach wenigstens einem der vorstehenden Ansprüche,
**gekennzeichnet durch** wenigstens eine Treppensteigeinrichtung (25).

7. Vorrichtung (1) nach wenigstens einem der vorstehenden Ansprüche,
**gekennzeichnet durch** wenigstens einen Antrieb (32) zum Antreiben der Vorrichtung (1).

8. Vorrichtung (1) nach wenigstens einem der vorstehenden Ansprüche,
**gekennzeichnet durch** wenigstens einen Antrieb (32) zum Antreiben der Treppensteigeinrichtung (25).

9. Vorrichtung (1) nach wenigstens einem der vorstehenden Ansprüche,
**gekennzeichnet durch** wenigstens eine Lenkeinrichtung (38) zum Lenken der Vorrichtung (1) in wenigstens eine erste oder zweite Richtung (A, B).
